# EUROPÄISCHE PATENTSCHRIFT

(11) **EP 3 222 149 B1**
(45) Veröffentlichungstag und Bekanntmachung des Hinweises auf die Patenterteilung: **16.12.2020**
(21) Anmeldenummer: 17151716.2
(22) Anmeldetag: 17.01.2017
(51) Int. Cl.: A23G 3/04, A23G 3/02, A23G 3/34

(54) **VORRICHTUNG UND VERFAHREN ZUM VERARBEITEN EINER SÜSSWARENMASSE**
DEVICE AND METHOD FOR PROCESSING A CONFECTIONARY SUBSTANCE
DISPOSITIF ET PROCÉDÉ DE TRAITEMENT D'UNE SUBSTANCE SUCRÉE

(30) Priorität: 22.03.2016 DE 102016204730
(43) Veröffentlichungstag der Anmeldung: 27.09.2017
(73) Patentinhaber: Syntegon Technology GmbH, 71332 Waiblingen (DE)
(72) Erfinder: Lieser, Alfred, 41749 Viersen (DE); Heinicke, Olaf, 40882 Ratingen (DE); Ernst, Markus, 53894 Mechernich (DE)
(74) Vertreter: Daub, Thomas

(56) Entgegenhaltungen:
- EP-A1- 1 062 874
- EP-A1- 2 428 121
- DE-C- 906 886
- DE-C- 950 977

## Beschreibung

### Stand der Technik

Die Erfindung betrifft eine Vorrichtung sowie ein Verfahren zum Verarbeiten einer Süßwarenmasse nach den Oberbegriffen der beiden unabhängigen Ansprüche. Ferner betrifft die Erfindung die Verwendung einer erfindungsgemäßen Vorrichtung bzw. eines erfindungsgemäßen Verfahrens.

Bei einer bekannten Vorrichtung zum Herstellen einer Jelly- bzw. Gummisüßwarenmasse wird die in einem Vorratsbehälter gespeicherte Süßwarengrundmasse, die typischerweise eine Temperatur von ca. 40°C aufweist, zunächst in einer als Wärmetauscher ausgebildeten Heizeinrichtung auf eine Temperatur auf oder oberhalb ihrer Siede- bzw. Kochtemperatur unter Gegendruck erhitzt. Durch die Erwärmung in dem Wärmetauscher erfolgt bei gleichzeitiger starker Durchmischung ein vollständiges Lösen der in der Gummisüßwarenmasse enthaltenen Zuckerkristalle und des Geliermittels. Anschließend wird die so zubereitete Masse nach Passieren eines Gegendruckventils unter Druckreduzierung in einen nachfolgenden Vakuumraum eingeleitet. Dabei erfolgt in dem unter Wirkverbindung mit einer Vakuumquelle, insbesondere mit einer Vakuumpumpe, angeordnetem Vakuumraum ein Abkühlen und Entgasen der Masse. Die dabei entstehende, einen höheren Trockengehalt aufweisende Masse wird mittels einer Austragspumpe o.ä. aus dem Vakuumraum abgezogen und weiterverarbeitet. Beim Abkühlen und Entgasen der Masse in dem Vakuumraum entstehen typischerweise ca. 1% bis 8% Brüden durch Nachverdampfung. Diese Brüden werden von der Unterdruckquelle aus dem Vakuumraum abgesaugt und anschließend in einem Kondensator kondensiert. Üblicherweise ist der Kondensator dabei in Form eines Wärmetauschers ausgebildet, bei dem Kühlwasser zur Kühlung bzw. Kondensation der Brüden dient. Wesentlich dabei ist, dass das Abkühlen bzw. Kondensieren in dem Kondensator zu einem zusätzlichen Energie- und somit Kostenaufwand führt. Dies rührt daher, dass beispielsweise das in dem Kondensator bzw. Wärmetauscher verwendete Kühlmedium mittels einer Pumpe ausgetauscht werden muss, um die Kühlwirkung des Kondensators sicherzustellen.

Aus der EP 2428121 A1 sind bereits ein Verfahren und eine Vorrichtung zur energiesparenden Herstellung von Süßwarenmassen bekannt. Die Vorrichtung weist einen Wiege-und Mischbehälter mit einer Gewichtsregeleinrichtung zum satzweisen gewichtsgenauen Eindosieren einer Flüssigkeit und von Zucker oder eines Zuckerersatzstopps als Trockenstoff zum Erzeugen einer Mischung auf. Die Flüssigkeit und der Trockenstoff werden so eindosiert und die Mischung wird so gemischt, dass eine Slurry mit einem hohen Trockensubstanzanteil von mindestens 85 % entsteht. Die Vorrichtung weist weiterhin eine an dem Wiege-und Mischbehälter angeordnete Heizeinrichtung mit einer Temperaturregeleinrichtung auf, die derart zum Erwärmen des Wiege-und Mischbehälters ausgebildet ist, dass die Slurry eine Temperatur von mindestens 70 °C besitzt.

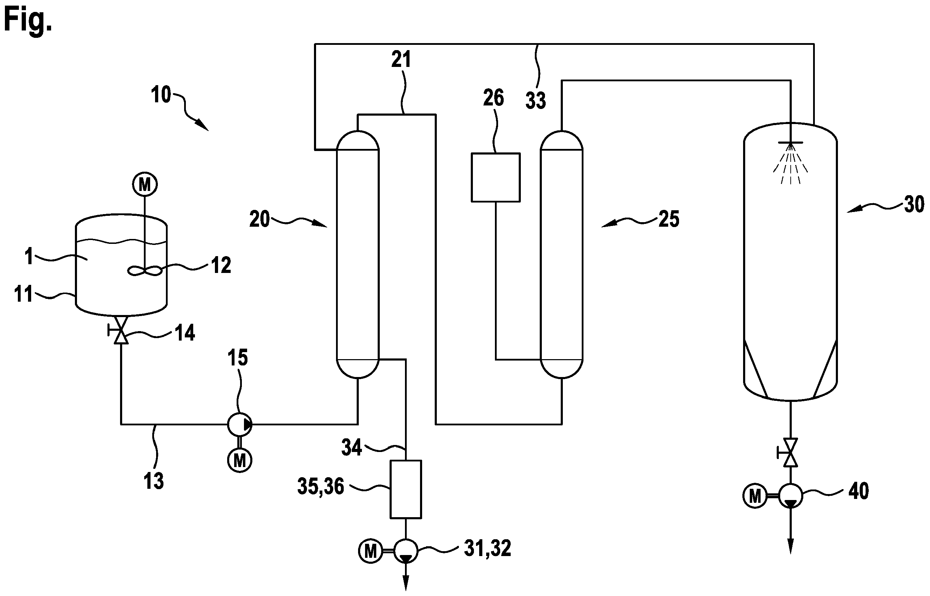

Aus der DE 950977C sind bereits ein Verfahren und eine Vorrichtung zum Eindampfen von Zuckerlösungen, vorzugsweise von Bonbonmassen bekannt. Eine vorgewärmte Lösung gelangt über eine Druckleitung in einen aus zwei Stufen bestehenden Kocher. Aus einem Expansionsraum, der gemäß Figur 1 Teil des Kochers ist, werden Brüden ständig zur Vorwärmung entnommen. Die Masse gelangt von der zweiten Kocherstufe, in der die Restverdampfung des Wassers vorzugsweise mit anschließender Vakuumwirkung in dem Vakuumraum stattfindet, in den Entnahmekessel. Der in dem Vakuumraum entstehende Dampf wird über die Saugleitung und den Kondensator als Kondensat von der Vakuumpumpe abgesaugt.

### Offenbarung der Erfindung

Ausgehend von dem dargestellten Stand der Technik liegt der Erfindung die Aufgabe zugrunde, eine Vorrichtung bzw. ein Verfahren nach dem Oberbegriff der beiden unabhängigen Ansprüche derart weiterzubilden, dass die Herstellung bzw. die Verarbeitung der Süßwarenmasse mit einem deutlich verringerten Energieaufwand möglich ist. Dadurch soll ein preiswerterer Herstellprozess ermöglicht werden.

Diese Aufgabe wird erfindungsgemäß bei einem Verfahren bzw. einer Vorrichtung mit den Merkmalen des unabhängigen Vorrichtungs- bzw. Verfahrensanspruchs gelöst.

Der Erfindung liegt die Idee zugrunde, die aus dem Vakuumraum abgesaugten Brüden, die infolge des zuvor stattgefundenen Erwärmens in dem Wärmetauscher eine erhöhte Temperatur und somit eine relativ große Wärmeenergie aufweisen, zum Vorwärmen der Süßwarengrundmasse zu nutzen, bevor diese in den Bereich des (Löse-) Wärmetauschers gelangt, in dem diese zum Lösen und Erwärmen der Bestandteile auf eine Lösetemperatur erwärmt wird. Dadurch lassen sich grundsätzlich zwei positive Effekte erzielen: Zum einen wird die in den Brüden enthaltende Wärmeenergie unmittelbar zur Erwärmung der Süßwarengrundmasse benutzt, so dass anschließend in dem Wärmetauscher die zum Erwärmen benötigte Wärmemenge bzw. Energiemenge reduziert ist. Darüber hinaus erfolgt durch die Wärmeabgabe der Brüden an die Süßwarengrundmasse in dem Wärmetauscher eine Abkühlung der Brüden, so dass diese zumindest teilweise kondensiert werden. Dies wiederum hat zur Folge, dass zur Nachkondensation der Brüden im Vergleich zum Stand der Technik der dafür verwendete Kondensator bzw. Wärmetauscher mit wesentlich geringerem Energiebedarf betrieben werden muss. Während der erstgenannte Effekt der Reduzierung der Wärmemenge zum Erwärmen der Süßwarengrundmasse zur einer Energieersparnis zwischen 25% und 40% an dem Wärmetauscher führt, führt die mit geringerer Energie erforderliche Nachkondensation der Brüden typischerweise zu einer weiteren deutlichen Energieeinsparung, so dass insgesamt gesehen beim soweit beschriebenen Verarbeitungsprozess der Masse gegenüber dem Stand der Technik eine Energieersparnis zwischen 30% bis über 50% erzielt werden kann.

Vorteilhafte Weiterbildungen der erfindungsgemäßen Vorrichtung bzw. des erfindungsgemäßen Verfahrens zur Verarbeitung einer Süßwarenmasse sind in den jeweiligen Unteransprüchen aufgeführt.

In bevorzugter konstruktiver Ausgestaltung ist sowohl die Heizeinrichtung zum Kochen oder Erwärmen und Lösen der Bestandteile der Süßwarengrundmasse als auch die Einrichtung zum Übertragen der Wärmeenergie aus den Brüden in die Süßwarengrundmasse zu deren Vorerwärmung jeweils in Form eines Wärmetauschers ausgebildet.

Die soweit beschriebene Vorrichtung bzw. das Verfahren finden bevorzugt Verwendung bei der Verarbeitung bzw. Herstellung von Jelly- oder Gummimassen, kann aber auch bei anderen Koch- und Löseprozessen für Süßwarenmassen sinnvolle Anwendung finden.

Weitere Vorteile, Merkmale und Einzelheiten der Erfindung ergeben sich auch der nachfolgenden Beschreibung bevorzugter Ausführungsbeispiele sowie anhand der Zeichnung.

Diese zeigt in der einzigen Figur eine schematische Darstellung einer erfindungsgemäßen Vorrichtung zum Verarbeiten einer Süßwarenmasse.

Die in der einzigen Figur dargestellte Vorrichtung 10 dient der Verarbeitung bzw. Herstellung einer Jelly- oder Gummimasse, wie sie bei der Herstellung von Süßwaren Verwendung findet. Die Vorrichtung 10 weist einen Vorratsbehälter 11 auf, in dem eine Süßwarengrundmasse 1 (die sogenannte Grundslurrymasse) gespeichert ist. Mittels eines motorisch betriebenen Mischers 12 wird die in dem Vorratsbehälter 11 vorhandene Süßwarengrundmasse 1 durchmischt. Gleichzeitig kann insbesondere durch eine nicht dargestellte Heizeinrichtung sichergestellt werden, dass zur weiteren Verarbeitung bzw. Sicherstellung der benötigten Viskosität die Süßwarengrundmasse 1 in dem Vorratsbehälter 11 eine Temperatur von typischerweise etwa 35°C bis 40°C aufweist.

Über eine Rohrleitung 13 mit zwischengeschaltetem Absperrventil 14 wird mittels einer Produktförderpumpe 15 die Süßwarengrundmasse 1 aus dem Vorratsbehälter 11 in einen Vorwärmetauscher 20 gefördert. In dem Vorwärmetauscher 20 wird die Süßwarengrundmasse 1 um bis zu 55°C gegenüber ihrer ursprünglichen Temperatur erwärmt. Von dem Vorwärmetauscher 20 gelangt die Süßwarengrundmasse 1 über eine weitere Rohrleitung 21 in einen Hauptwärmetauscher 25, in dem die Süßwarengrundmasse 1 auf die zum Lösen der Zuckerkristalle und des Geliermittels, die in der Süßwarengrundmasse 1 enthalten sind, typische Lösetemperatur bzw. Kochtemperatur erwärmt wird. Diese Temperatur beträgt beispielsweise ca. 125°C.

Der Hauptwärmetauscher 25 wird zum Beispiel mittels Heizdampf betrieben, der mittels einer Einrichtung 26 in den Einlassbereich des Hauptwärmetauschers 25 geleitet wird. Durch Wärmeübertragung in dem Hauptwärmetauscher 25 bei gleichzeitiger Abkühlung des Wärmemediums (Heizdampf) und eine entsprechende Gestaltung des Wärmetauschers, beispielsweise durch in dem Strömungsweg der Süßwarengrundmasse 1 angeordnete Strömungselemente, erfolgt wie oben erläutert das vollständige Lösen der Zuckerkristalle und des Geliermittels der Süßwarengrundmasse 1.

Anschließend wird die erwärmte und gelöste Süßwarengrundmasse 1 in einen Ausdampfraum 30 gefördert, der in Wirkverbindung mit einer Vakuumeinrichtung 31 in Form einer Vakuumpumpe 32 angeordnet ist. In dem Ausdampfraum 30 wird die Süßwarengrundmasse 1 entgast und gleichzeitig abgekühlt. Dabei entstehen durch Nachverdampfung oder Verkochen je nach verwendetem Produkt ca.1% bis 8% Dampfbrüden. Diese Dampfbrüden werden durch die Vakuumpumpe 32 über eine Rohrleitung 33 in den Eingangsbereich des Vorwärmetauschers 20 gefördert, wo sie der (Vor-) Erwärmung der Süßwarengrundmasse 1 dienen. Es ist jedoch auch denkbar, Teile dieser Dampfbrüden am Vorwärmetauscher 20 vorbei zu führen, um die Baugröße des Vorwärmetauschers 20 reduzieren zu können. Beim Durchströmen des Vorwärmetauschers 20 kondensiert bereits zumindest ein Teil der Dampfbrüden infolge der Abkühlung (Wärmeübertragung von den Dampfbrüden in die Süßwarengrundmasse 1). Gegebenenfalls nicht kondensierte Dampfbrüden gelangen anschließend über eine Ausgangsleitung 34 aus dem Vorwärmetauscher 20 in den Bereich eines insbesondere als Wärmetauscher 35 ausgebildeten Kondensators 36. Die Förderung der Dampfbrüden aus dem Ausdampfraum 30 durch die Rohrleitung 33 in den Vorwärmetauscher 20 und von dort in den Wärmetauscher 35 bzw. Kondensator 36 erfolgt über die bereits angesprochene Vakuumpumpe 32, die sich an den Wärmetauscher 35 bzw. den Kondensator 36 anschließt.

Die in dem Ausdampfraum 30 abgekühlte und entgaste Süßwarengrundmasse 1 kann aus dem Ausdampfraum 30 mittels einer Austragspumpe 40 in üblicher Art und Weise abgeführt und der weiteren Verarbeitung zu Süßwaren zugeführt werden.

Die soweit beschriebene Vorrichtung 10 kann in vielfältiger Art und Weise abgewandelt bzw. modifiziert werden, ohne vom Erfindungsgedanken abzuweichen.

## Patentansprüche

1. Vorrichtung (10) zum Verarbeiten einer Süßwarenmasse, mit einem Vorratsbehälter (11) zur Speicherung einer Süßwarengrundmasse (1), einer mit dem Vorratsbehälter (11) verbundenen Heizeinrichtung (25) zum Erwärmen und Lösen oder Kochen der Bestandteile der Süßwarengrundmasse (1), einem sich an die Heizeinrichtung (25) anschließenden Ausdampfraum (30), in dem die erwärmte Süßwarengrundmasse (1) ausdampft und abkühlt, mit einer mit dem Ausdampfraum (30) verbundenen Unterdruckquelle (31) zum Absaugen von Brüden aus dem Ausdampfraum (30), und mit einer im Strömungsweg zwischen dem Ausdampfraum (30) und der Unterdruckquelle (31) angeordneten Einrichtung (36) zum Kondensieren der Brüden,
**dadurch gekennzeichnet,**
**dass** im Strömungsweg zwischen dem Ausdampfraum (30) und der Einrichtung (36) zum Kondensieren zumindest von Teilen der Brüden ein Wärmetauscher (20) angeordnet ist, der dazu ausgebildet ist, die aus dem Vorratsbehälter (11) kommende Süßwarengrundmasse (1) vor deren Eintritt in die Heizeinrichtung (25) zu erwärmen.

2. Vorrichtung nach Anspruch 1,
**dadurch gekennzeichnet,**
**dass** die Heizeinrichtung (25) als Wärmetauscher ausgebildet ist.

3. Vorrichtung nach Anspruch 1 oder 2,
**dadurch gekennzeichnet,**
**dass** die Unterdruckquelle (31) als Vakuumpumpe (32) ausgebildet ist.

4. Vorrichtung nach einem der Ansprüche 1 bis 3,
**dadurch gekennzeichnet,**
**dass** die Einrichtung (36) zum Kondensieren der Brüden als Wärmetauscher ausgebildet ist.

5. Verfahren zum Verarbeiten einer Süßwarenmasse, insbesondere mittels einer Vorrichtung (10) nach einem der Ansprüche 1 bis 4, mit einem Vorratsbehälter (11) zur Speicherung einer Süßwarengrundmasse (1), aus dem die Süßwarengrundmasse (1) in eine Heizeinrichtung (25) zum Erwärmen und Lösen der Bestandteile der Süßwarengrundmasse (1) gefördert wird, wobei nach dem Erwärmen und Lösen der Bestandteile der Süßwarengrundmasse (1) diese in einen Ausdampfraum (30) weitergefördert wird, in dem die erwärmte Süßwarengrundmasse (1) unter Erhöhung ihrer Trockenmasse ausdampft und abkühlt, wobei beim Ausdampfen entstehender Brüden mittels einer mit dem Ausdampfraum (30) verbundenen Unterdruckquelle (31) aus dem Ausdampfraum (30) abgesaugt wird, und wobei die abgesaugten Brüden mit einer im Strömungsweg zwischen dem Ausdampfraum (30) und der Unterdruckquelle (31) angeordneten Einrichtung (36) kondensiert wird,
**dadurch gekennzeichnet,**
**dass** die Brüden vor dem Kondensieren in der Einrichtung (36) in einen von der Süßwarengrundmasse (1) durchströmten Wärmetauscher (20) eingeleitet wird, wobei die Brüden durch Wärmeabgabe an die Süßwarengrundmasse (1) die Süßwarengrundmasse (1) erwärmt und in dem Wärmetauscher (20) zumindest teilweise kondensiert.

6. Verfahren nach Anspruch 5,
**dadurch gekennzeichnet,**
**dass** die Süßwarengrundmasse (1) in dem Wärmetauscher (20) um bis zu 55°C erwärmt wird.

7. Verfahren nach Anspruch 5 oder 6,
**dadurch gekennzeichnet,**
**dass** die Süßwarengrundmasse (1) in der Heizeinrichtung (25) zum Erwärmen und Lösen oder Einkochen der Bestandteile der Süßwarengrundmasse (1) auf eine Temperatur unterhalb oder auf ihre Siedetemperatur erwärmt wird.

8. Verfahren nach einem der Ansprüche 5 bis 7,
**dadurch gekennzeichnet,**
**dass** die Masse der Brüden, die aus dem Ausdampfraum (30) in den Wärmetauscher (20) geleitet wird, zwischen 1% und 8% der Gesamtmasse der in den Ausdampfraum (30) eingeleiteten Masse entspricht.

9. Verwendung einer Vorrichtung (10) nach einem der Ansprüche 1 bis 4 bzw.
eines Verfahrens nach einem der Ansprüche 5 bis 8 zur Herstellung von Jelly- oder Gummimassen.

## Claims

1. Device (10) for processing a confectionery mass,
with a stock container (11) for a storage of a basic confectionery mass (1), with a heating device (25), connected with the stock container (11), for heating and dissolving or boiling the components of the basic confectionery mass (1), with an evaporation space (30) subsequent to the heating device (25), in which the heated basic confectionery mass (1) is evaporated and cooled, with a negative pressure source (31), connected with the evaporation space (30), for sucking vapours from the evaporation space (30), and with an apparatus (36) for condensing the vapours that is arranged in the flow path between the evaporation space (30) and the negative pressure source (31),
**characterised in that,** in the flow path between the evaporation space (30) and the apparatus (36) for condensing at least portions of the vapours, a heat exchanger (20) is arranged which is configured for heating the basic confectionery mass (1) coming out of the stock container (11) before it enters the heating device (25).

2. Device according to claim 1,
**characterised in that** the heating device (25) is embodied as a heat exchanger.

3. Device according to claim 1 or 2,
**characterised in that** the negative pressure source (31) is embodied as a vacuum pump (32).

4. Device according to one of claims 1 to 3,
**characterised in that** the apparatus (36) for condensing the vapours is embodied as a heat exchanger.

5. Method for processing a confectionery mass, in particular by means of a device (10) according to one of claims 1 to 4, with a stock container (11) for a storage of a basic confectionery mass (1), from which the basic confectionery mass (1) is conveyed into a heating device (25) for heating and dissolution of the components of the basic confectionery mass (1) wherein, following the heating and dissolution of the components of the basic confectionery mass (1), the basic confectionery mass (1) is conveyed onwards into an evaporation space (30), in which the heated basic confectionery mass (1) is evaporated, with its dry mass increasing, and cooled down, wherein vapours resulting from the evaporation are sucked from the evaporation space (30) by means of a negative pressure source (31) that is connected with the evaporation space (30) and wherein the sucked-off vapours are condensed via an apparatus (36) that is arranged in the flow path between the evaporation space (30) and the negative pressure source (31),
**characterised in that** the vapours, before condensation in the apparatus (36), are conveyed into a heat exchanger (20) that is flowed through by the basic confectionery mass (1), the vapours heating the basic confectionery mass (1) via heat emission to the basic confectionery mass (1) and at least partially condensing in the heat exchanger (20).

6. Method according to claim 5,
**characterised in that** the basic confectionery mass (1) is heated in the heat exchanger (20) by up to 55 degrees.

7. Method according to claim 5 or 6,
**characterised in that** for a heating and dissolution or boiling-down of the components of the basic confectionery mass (1), the basic confectionery mass (1) is heated in the heating device (25) to a temperature that is below or equal to its boiling temperature.

8. Method according to one of claims 5 to 7,
**characterised in that** the mass of the vapours conveyed out of the evaporation space (30) into the heat exchanger (20) is equivalent to between 1 % and 8 % of the total mass of the mass introduced into the evaporation space (30).

9. Utilization of a device (10) according to one of claims 1 to 4 and/or of a method according to one of claims 5 to 8 for the production of jelly mass or rubbery mass.

## Revendications

1. Dispositif (10) pour traiter une masse de confiserie,
avec un conteneur à provisions (11) pour le stockage d'une masse basique de confiserie (1), avec un dispositif de chauffage (25) relié au conteneur à provisions (11) pour chauffage et dissolution et cuisson des composants de la masse basique de confiserie (1), avec un espace d'évaporation (30) succédant au dispositif de chauffage (25), dans lequel la masse basique de confiserie (1) chauffée s'évapore et se refroidit, avec une source de pression négative (31) reliée à l'espace d'évaporation (30) pour une aspiration des buées de l'espace d'évaporation (30) et avec un appareil (36) pour condenser les buées, qui est disposé dans le chemin de flux entre l'espace d'évaporation (30) et la source de pression négative (31),
**caractérisé en ce que**
dans le chemin de flux entre l'espace d'évaporation (30) et l'appareil (36) pour condenser au moins des parties des buées, un échangeur de chaleur (20) est disposé qui est configuré pour chauffer la masse basique de confiserie (1) arrivant du conteneur à provisions (11) avant qu'elle entre dans le dispositif de chauffage (25).

2. Dispositif selon la revendication 1,
**caractérisé en ce que** le dispositif de chauffage (25) est réalisé comme échangeur de chaleur.

3. Dispositif selon la revendication 1 ou 2,
**caractérisé en ce que** la source de pression négative (31) est réalisée comme pompe à vide (32).

4. Dispositif selon l'une des revendications 1 à 3,
**caractérisé en ce que** pour la condensation des buées l'appareil (36) est réalisé comme échangeur de chaleur.

5. Procédé pour traiter une masse basique de confiserie, en particulier par le biais d'un dispositif (10) selon l'une des revendications 1 à 4,
avec un conteneur à provisions (11) pour le stockage d'une masse basique de confiserie (1),
ladite masse basique de confiserie (1) étant convoyée hors du conteneur à provisions (11) dans un dispositif de chauffage (25) pour chauffage et dissolution des composants de la masse basique de confiserie (1),
où, après le chauffage et la dissolution des composants de la masse basique de confiserie (1), ladite masse basique de confiserie (1) est transportée en avant dans un espace d'évaporation (30), dans lequel la masse basique de confiserie (1) chauffée s'évapore en augmentant sa matière sèche et se refroidit,
où des buées résultant de l'évaporation sont aspirées hors de l'espace d'évaporation (30) par le biais d'une source de pression négative (31) reliée à l'espace d'évaporation (30), et
où les buées aspirées sont condensées par un appareil (36) disposé dans le chemin de flux entre l'espace d'évaporation (30) et la source de pression négative (31),
**caractérisé en ce que** les buées, avant condenser dans l'appareil, sont conduites dans un échangeur de chaleur (20) traversé par la masse basique de confiserie (1),
où les buées chauffent la masse basique de confiserie (1) par émission de chaleur à la masse basique de confiserie (1) et condensent au moins partiellement dans l'échangeur de chaleur (20).

6. Procédé selon la revendication 5,
**caractérisé en ce que** la masse basique de confiserie (1) est chauffée par jusqu'à 55°C dans l'échangeur de chaleur (20).

7. Procédé selon la revendication 5 ou 6,
**caractérisé en ce que** pour chauffage ou dissolution ou cuisson des composants de la masse basique de confiserie (1), la masse basique de confiserie (1) est chauffée à une température inférieure ou égale à sa température d'ébullition dans le dispositif de chauffage (25).

8. Procédé selon l'une des revendications 5 à 7,
**caractérisé en ce que** la masse des buées conduite hors de l'espace d'évaporation (30) dans l'échangeur de chaleur (20) est équivalente à entre 1 % et 8 % de la masse totale de la masse introduite dans l'espace d'évaporation (30).

9. Usage d'un dispositif (10) selon l'une quelconque des revendications 1 à 4 et/ou d'un procédé selon l'une quelconque des revendications 5 à 8 pour la production des masses de gelée ou de gomme.
